# EUROPÄISCHE PATENTSCHRIFT

(11) **EP 3 896 023 B1**
(45) Veröffentlichungstag und Bekanntmachung des Hinweises auf die Patenterteilung: **07.05.2025**
(21) Anmeldenummer: 21161813.7
(22) Anmeldetag: 10.03.2021
(51) Int. Cl.: B66F 9/06, B66F 9/075

(54) **VORRICHTUNG SOWIE VERFAHREN ZUM FERNSTEUERN EINES FLURFÖRDERZEUGS**
DEVICE AND METHOD FOR REMOTE CONTROLLING AN INDUSTRIAL TRUCK
DISPOSITIF, AINSI QUE PROCÉDÉ DE TÉLÉCOMMANDE D'UN CHARIOT DE MANUTENTION

(30) Priorität: 27.03.2020 DE 102020108592
(43) Veröffentlichungstag der Anmeldung: 20.10.2021
(73) Patentinhaber: Jungheinrich Aktiengesellschaft, 22047 Hamburg (DE)
(72) Erfinder: Bistry, Hannes, 25421 Pinneberg (DE); Richter, Maximilian, 22297 Hamburg (DE); Riedel, Lukas, 20255 Hamburg (DE); Knie, Andreas, 20255 Hamburg (DE); Wetegrove, Ralf, 22850 Norderstedt (DE)
(74) Vertreter: Hauck Patentanwaltspartnerschaft mbB

(56) Entgegenhaltungen:
- CN-U- 210 133 848
- DE-A1- 102016 000 353
- KR-B1- 101 809 289

## Beschreibung

Die Erfindung betrifft eine Vorrichtung sowie ein Verfahren zum Fernsteuern mindestens eines Flurförderzeugs. Die Erfindung betrifft zudem ein System aus einer solchen Vorrichtung sowie einem oder mehreren durch die Vorrichtung fernzusteuernden bzw. ferngesteuerten Flurförderzeugen.

In einer Vielzahl von Einsatzbereichen werden heutzutage Flurförderzeuge als fahrerlose Transportfahrzeuge (FTF, im englischen "Automatic Guided Vehicles", AGV) im Rahmen eines fahrerlosen Transportsystems (FTS) verwendet. So können die FTF beispielsweise in einem Warenlager automatisiert gewisse Aufgaben entsprechend ihrer Programmierung erfüllen. Beispielsweise kann ein solches FTF Waren aus einem Regallager abholen und zu einem Bestimmungsort bringen. Eine ständige Herausforderung derartiger automatischer Systeme sind sich verändernde Umgebungsbedingungen, zum Beispiel in den Fahrweg des Flurförderzeugs gelangende Hindernisse. Ein solches FTS kann daher relativ einfache Aufgaben, wie beispielsweise den Transport über eine lange, insbesondere gerade Strecke zuverlässig erfüllen. Zumindest bei komplizierteren Aufgaben kann es jedoch zu Störungen im automatischen Betrieb des Systems kommen und es kann ein manuelles Eingreifen in die Steuerung des betroffenen FTF notwendig werden.

In einem solchen Störungsfall kann beispielsweise eine Bedienperson über einen Bedienstand des FTF dieses manuell steuern. Auch sind Handsteuergeräte bekannt, die bei Bedarf das Fahrzeug angeschlossen werden können und eine Bedienung des Flurförderzeugs ermöglichen, nicht nur im Fehlerfall, sondern beispielsweise auch zu Wartungs- oder Servicezwecken. Derartige Handsteuergeräte sind insbesondere dann üblich, wenn die FTF keinen eigenen Bedienstand aufweisen oder falls es sich um sogenannte "Man-up-Geräte" handelt, bei welchen der Bedienstand im Fehlerfall möglicherweise nicht erreichbar ist, weil er sich in einem ausgefahrenen Zustand befindet.

Aus KR 101 809 289 B1 ist eine Fernsteuereinheit für schienengeführte Transportwagen bekannt, welche in einem Störungsfall zum Tragen kommt.

CN 210133848 U schlägt vor, eine Steuerungskabine mit simulierten Steuerungselementen eines Flurförderzeugs zu nutzen, um ein Flurförderzeug aus der Entfernung zu steuern. Die für die Ansteuerung des Flurförderzeug erzeugten Steuerbefehle werden zwischen der Steuerungskabine und dem zu steuernden Flurförderzeug drahtlos übertragen. Dieses Dokument offenbart die Merkmale des Oberbegriffs von Anspruch 1.

DE 102016000353 A1 beschreibt einen Simulator für ein Flurförderzeug, mit einem Steuerstand, der zumindest ein Eingabemittel zum Eingeben von Steuerbefehlen aufweist, einem grafischen Simulationsmodul zum Berechnen einer virtuellen Darstellung der Maschinenumgebung und/oder von aus dem Steuerstand sichtbaren Maschinenkomponenten, sowie einer Anzeigevorrichtung zum Anzeigen der berechneten virtuellen Darstellung. Ein Bewegungssimulationsmodul zum Bestimmen von Bewegungen und/oder Verformungen der Maschinenkomponenten in Abhängigkeit der eingegebenen Steuerbefehle ist vorgesehen, in Abhängigkeit derer das grafische Simulationsmodul die virtuelle Darstellung berechnet.

Der Erfindung liegt die Aufgabe zugrunde, das Fernsteuern eines Flurförderzeugs möglichst einfach und intuitiv zu gestalten.

Die Erfindung löst die Aufgabe durch eine Vorrichtung gemäß Anspruch 1 sowie durch ein Verfahren gemäß Anspruch 11. Vorteilhafte Ausgestaltungen sind Gegenstand der abhängigen Ansprüche, der Beschreibung sowie der Figuren.

Die erfindungsgemäße Vorrichtung zum Fernsteuern mindestens eines Flurförderzeugs umfasst einen Remote-Bedienstand sowie eine Steuereinheit, wobei der Remote-Bedienstand einem Bedienstand eines Flurförderzeugs entsprechende Bedienelemente aufweist, wobei die Steuereinheit dazu ausgebildet ist, ansprechend auf eine Betätigung der Bedienelemente des Remote-Bedienstands Steuersignale für das fernzusteuernde Flurförderzeug zu generieren und die Steuersignale über eine Funkübertragungsstrecke zu dem fernzusteuernden Flurförderzeug zu übermitteln.

Das erfindungsgemäße Verfahren sieht das Fernsteuern mindestens eines Flurförderzeugs mittels eines Remote-Bedienstands vor, wobei der Remote-Bedienstand einem Bedienstand eines Flurförderzeugs entsprechende Bedienelemente aufweist, wobei ansprechend auf eine Betätigung der Bedienelemente des Remote-Bedienstands eine Steuereinheit Steuersignale für das fernzusteuernde Flurförderzeug generiert und die Steuersignale über eine Funkübertragungsstrecke zu dem fernzusteuernden Flurförderzeug übermittelt.

Die erfindungsgemäße Vorrichtung sowie Ausgestaltungen derselben werden im Folgenden gemeinsam mit dem erfindungsgemäßen Verfahren erläutert. Zu der Vorrichtung gemachte Ausführungen gelten entsprechend für das Verfahren und umgekehrt.

Erfindungsgemäß ist vorgesehen, dass das fernzusteuernde Flurförderzeug über einen Remote-Bedienstand ferngesteuert wird, welcher einem Bedienstand eines Flurförderzeugs entsprechende Bedienelemente aufweist. Dies bedeutet, dass die Bedienelemente des Remote-Bedienstandes in ihrer Funktion und insbesondere ihrer Bauart den Bedienelementen des Bedienstands eines Flurförderzeugs nachgebildet oder identisch mit diesen sind. Es kann sich insbesondere um gerade die Bauelemente oder Baugruppen handeln, welche auch für die Bedienelemente des Bedienstands des Flurförderzeugs selbst verwendet werden. Insbesondere kann der Remote-Bedienstand teilweise oder vollständig dem Bedienstand eines Flurförderzeugs entsprechen. Das Flurförderzeug, dessen Bedienstand die Bedienelemente bzw. der Remote-Bedienstand entsprechen, kann insbesondere das oder eines der fernzusteuernden Flurförderzeuge sein. Das Flurförderzeug kann über den Bedienstand, dem die Bedienelemente bzw. der Remote-Bedienstand entsprechen, manuell steuerbar sein.

Beispielsweise können zumindest einige der Bedienelemente des Remote-Bedienstands an einem Bedienkopf angeordnet sein, der dem Bedienkopf eines Flurförderzeugs entspricht. Insbesondere kann der Remote-Bedienstand auch eine den Bedienkopf tragende Deichsel aufweisen, die in ihrer Funktion und insbesondere ihrer Bauart einer Deichsel eines Flurförderzeugs entspricht. Auch kann der Bedienkopf einem Multifunktionslenkrad eines Flurförderzeugs entsprechen, wie später noch erläutert wird. Der erfindungsgemäße Remote-Bedienstand lässt sich aufgrund der dem Bedienstand eines Flurförderzeugs entsprechenden Bedienelemente besonders intuitiv und einfach bedienen. So muss eine im Bedienen von Flurförderzeugen versierte Bedienperson sich nicht auf andersartige Bedienelemente einstellen, wodurch Fehlbedienungen vermieden werden können. Insbesondere muss die Bedienperson nicht für das Bedienen des Remote-Bedienstands angelernt werden.

Die Steuereinheit kann Teil des Remote-Bedienstandes sein, kann aber auch Teil einer zentralen Steuerung sein, beispielsweise der Steuerung eines FTS mit mehreren FTF. Der Remote-Bedienstand kann kabelgebunden oder kabellos mit der zentralen Steuerung kommunizieren. Die Steuereinheit selbst kommuniziert mit dem fernzusteuernden Flurförderzeug drahtlos über die Funkübertragungsstrecke. Hierfür kann eine Sendeeinheit vorgesehen sein. Es kann jedoch auch eine Sende- und Empfangseinheit vorgesehen sein, als Teil des Remote-Bedienstands oder der zentralen Steuerung, wobei die Steuereinheit dann insbesondere auch dazu ausgebildet sein kann, von dem fernzusteuernden Flurförderzeug für das Fernsteuern relevante Daten zu empfangen. Die von der Steuereinheit generierten Steuersignale können insbesondere Sollwerte für Steuerfunktionen des fernzusteuernden Flurförderzeugs sein. Steuerfunktionen wiederum können insbesondere Fahrfunktionen des fernzusteuernden Flurförderzeugs, wie beispielsweise Lenkeinschlag und/oder Fahrgeschwindigkeit, aber auch Arbeitsfunktionen des fernzusteuernden Flurförderzeugs, wie beispielsweise ein Hub und/oder ein Mastvorschub sein. Grundsätzlich können die Steuersignale jedoch auch nur die Betätigung des jeweiligen Bedienelements des Remote-Bedienstands widerspiegeln, wobei Sollwerte für die Steuerfunktionen dann erst an dem die Steuersignale empfangenden, fernzusteuernden Flurförderzeug generiert werden. So kann nach einer Ausgestaltung das fernzusteuernde Flurförderzeug die Steuersignale empfangen und aus den empfangenen Steuersignalen, beispielsweise mittels einer fahrzeugeigenen Steuereinheit, Sollwerte für die Steuerfunktionen des Flurförderzeugs generieren. Die Funkübertragungsstrecke wird vor der Übertragung von Steuersignalen hergestellt und kann bspw. durch eine Verschlüsselung gesichert sein. Die Funkübertragungsstrecke kann eine Flusskontrolle ermöglichen, d.h. die empfängerseitige Prüfung, ob die Daten regelmäßig eintreffen. Der Remote-Bedienstand, die zentrale Steuereinheit oder die fahrzeugeigene Steuereinheit des fernzusteuernden Flurförderzeugs kann dazu ausgebildet sein, eine Autorisierung und/oder Authentifizierung vorzunehmen. Im Rahmen der Autorisierung kann beispielsweise geprüft werden, ob der Bediener des Remote-Bedienstands zum Fernsteuern des Flurförderzeugs berechtigt ist. Im Rahmen der Authentifizierung kann beispielsweise geprüft werden, ob der den Remote-Bedienstand verwendende Bediener ist, wer er vorgibt zu sein. Dazu können verschiedene im Stand der Technik bekannte Vorrichtungen und Verfahren eingesetzt werden.

Es kann ein System vorgesehen sein aus einer solchen Vorrichtung zum Fernsteuern eines Flurförderzeugs sowie mindestens einem durch die Vorrichtung ferngesteuerten Flurförderzeug, bevorzugt mehreren Flurförderzeugen. Bei einem solchen System kann es sich insbesondere um ein FTS handeln, wobei über den Remote-Bedienstand die ansonsten als FTF automatisch fahrenden Flurförderzeuge fernsteuerbar sind. Sollte eines dieser FTF, wie eingangs erläutert, einem Störungsfall unterliegen, kann eine Bedienperson mittels des Remote-Bedienstands in einfacher Weise das betroffene Flurförderzeug fernsteuern und somit die Störung beseitigen. Sollte beispielsweise aufgrund eines in den Fahrweg des FTF gelangten Hindernisses der Störungsfall eingetreten sein, kann die Bedienperson das FTF mittels des Remote-Bedienstands um das Hindernis herum steuern. Es ist auch möglich, im ferngesteuerten Betrieb das Hindernis, z.B. eine Palette, aufzunehmen und an einen anderen Ort zu bringen, also die Ursache des Störungsfalles zu beseitigen. Nach Beseitigung des Störungsfalls kann wieder der automatische Betrieb des FTF aufgenommen werden. Aufgrund der dem Bedienstand des Flurförderzeugs entsprechenden Bedienelemente des Remote-Bedienstands lässt sich dieser einfach und intuitiv bedienen, wie erwähnt. Es können dabei nicht nur die Bedienelemente oder einige Bedienelemente dem Bedienstand eines Flurförderzeugs entsprechen, sondern, wie ebenfalls angesprochen, auch ein Bedienkopf oder sogar eine Deichsel. Insbesondere kann der Remote-Bedienstand einen kompletten Bedienstand eines Flurförderzeugs aufweisen, umfassend die Bedienelemente und bspw. auch eine Standplattform.

Nach einer besonders bevorzugten Ausgestaltung ist der Remote-Bedienstand Teil eines Fahrsimulators für Flurförderzeuge. Insbesondere in diesem Fall kann der Remote-Bedienstand vollständig dem Bedienstand eines Flurförderzeugs, insbesondere mit Originalbedienelementen, entsprechen. Derartige Simulatoren dienen der Schulung von Bedienpersonen in der Steuerung von Flurförderzeugen. Ein solcher Fahrsimulator kann hierfür beispielsweise eine Visualisierungseinrichtung, z.B. eine Virtual-Reality-Brille, einen Bildschirm oder ein Head-up Display, aufweisen, welche der Bedienperson eine simulierte Umgebung darstellt. Die erfindungsgemäße Vorrichtung kann eine solche Visualisierungseinrichtung insbesondere auch unabhängig von der vorliegenden Ausgestaltung aufweisen. So kann die Visualisierungseinrichtung beispielsweise Umgebungsdaten, aber auch Ist-Werte von Betriebsdaten, des fernzusteuernden Flurförderzeugs, beispielsweise einen Videofeed, anzeigen. Somit kann eine Bedienperson mittels des Remote-Bedienstands auch weit entfernte und insbesondere nicht im Sichtfeld der Bedienperson befindliche Flurförderzeuge fernsteuern. Durch die Integration des erfindungsgemäßen Remote-Bedienstands, insbesondere der gesamten erfindungsgemäßen Vorrichtung, in den Fahrsimulator wird lediglich eine einzige Vorrichtung für diese beiden Zwecke, also für das Fernbedienen eines Flurförderzeugs sowie die Fahrsimulation, benötigt. Dies ist wirtschaftlich von Vorteil. So kann beispielsweise ein möglicherweise ohnehin vorhandener Fahrsimulator als erfindungsgemäßer Remote-Bedienstand verwendet werden.

Erfindungsgemäß ist der Remote-Bedienstand ein einem Flurförderzeug eigener Bedienstand. Erfindungsgemäß wird also der Bedienstand eines real existierenden, insbesondere funktionsfähigen Flurförderzeugs verwendet, um ein anderes Flurförderzeug fernzusteuern. Der Bedienstand kann durch eine Visualisierungseinrichtung, wie oben beschrieben, ergänzt werden. Über den eigenen Bedienstand kann das Flurförderzeug manuell steuerbar sein. Das erläuterte System umfasst entsprechend ein den Remote-Bedienstand als eigenen Bedienstand aufweisendes Flurförderzeug. Es kann somit ein insbesondere ohnehin vorhandenes Flurförderzeug zum Fernsteuern eines anderen Flurförderzeugs verwendet werden. Das Anschaffen eines separaten, lediglich für das Fernsteuern vorgesehenen Remote-Bedienstands ist dann nicht nötig. Vielmehr kann der Bedienstand eines möglicherweise ohnehin vorhandenen Flurförderzeugs als Remote-Bedienstand für ein anderes Flurförderzeug dienen. Sollte bei dem erläuterten FTS ein Störungsfall auftreten, kann eine Bedienperson den Bedienstand ihres eigenen, manuell bedienbaren Flurförderzeugs als Remote-Bedienstand für das dem Störungsfall unterliegende FTF verwenden und sich auf dieses aufschalten. Dies ist insbesondere bei aktuellen Generationen von Flurförderzeugen möglich, da diese üblicherweise nach dem "Drive-by-Wire"-Prinzip aufgebaut sind, also keine mechanische Verbindung zwischen den Bedienelementen und der Fahrzeugmechanik aufweisen, sondern lediglich eine elektrische. Die über die Bedienelemente des Flurförderzeugs generierten Steuersignale können somit in einem Remote-Modus anstatt an das eigene Flurförderzeug an das fernzusteuernde Flurförderzeug übermittelt werden. Hierfür kann eine ohnehin am Flurförderzeug vorhandene Sendeeinheit bzw. Sende- und Empfangseinheit verwendet werden. Auch kann die Steuereinheit des fernsteuernden Flurförderzeugs bereits einen Sollwert für das ferngesteuerte Flurförderzeug generieren. Grundsätzlich kann dies jedoch auch, wie erwähnt, über eine zentrale Steuerung erfolgen oder an dem die Steuersignale empfangenden Flurförderzeug.

Nach einer diesbezüglichen Ausgestaltung ist auch das den Remote-Bedienstand aufweisende Flurförderzeug durch einen entsprechend ausgebildeten, weiteren Remote-Bedienstand fernsteuerbar ausgebildet. Dieser weitere Remote-Bedienstand kann insbesondere ebenfalls ein eigener Bedienstand eines anderen Flurförderzeugs sein, über welchen dieses ansonsten manuell gesteuert wird. Folglich kann es sich bei dem Flurförderzeug, das den Remote-Bedienstand aufweist, um ein Flurförderzeug handeln, dass sowohl für den manuellen als auch für den automatischen Betrieb ausgelegt ist. Insbesondere im automatischen Betrieb kann dieses Flurförderzeugs dann seinerseits fernsteuerbar sein. Das erwähnte System kann mehrere Flurförderzeuge aufweisen, welche sich gegenseitig fernsteuern können. Insbesondere können alle Flurförderzeuge des Systems sich in der erfindungsgemäßen Weise gegenseitig fernsteuern. So kann bei einem Störungsfall in dem erläuterten FTS das der Störung unterliegende FTF beispielsweise durch ein anderes FTF des FTS ferngesteuert werden. Es wird somit ein geschlossenes FTS gebildet, mit welchem sich eventuell auftretende Störungen im automatischen Betrieb durch ein manuelles Eingreifen einfach lösen lassen. Dies kann beispielsweise sinnvoll sein, wenn das von der Störung betroffene FTF recht weit entfernt oder schwer erreichbar ist oder falls es keinen eigenen Bedienstand aufweist. Insbesondere ist dann kein separater Remote-Bedienstand oder ein weiteres von dem System unabhängiges Flurförderzeug notwendig.

Nach einer Ausgestaltung weist der Remote-Bedienstand einen dem Bedienstand eines Flurförderzeugs entsprechenden Bedienkopf auf, wobei zumindest einige der Bedienelemente an dem Bedienkopf angeordnet sind. Insbesondere kann der gesamte Bedienkopf mitsamt allen für das Fernsteuern relevanten Bedienelementen dem Bedienstand eines Flurförderzeugs, insbesondere eines fernzusteuernden Flurförderzeugs, entsprechen. Es kann sich, wie erwähnt, insbesondere um die gleichen Bauteile handeln. Der Bedienkopf kann beispielsweise ein sich entlang seiner Längsachse erstreckendes Horn mit sich auf gegenüberliegenden Seiten des Horns von der Längsachse forterstreckenden Tragabschnitten und mit dem Horn verbundene Griffe mit jeweils gegenüberliegend der Tragabschnitte angeordneten Greifabschnitten aufweisen. Die einander gegenüberliegenden Tragabschnitte und Greifabschnitte können jeweils durch einen Grifföffnung voneinander beabstandet sein. Die Bedienelemente können insbesondere an einem oder beiden der Tragabschnitte angeordnet sein. Auch kann sich, insbesondere an einem Ende des Horns, ein Fahrerschaltgriff als Bedienelement befinden. Die Bedienung des Remote-Bedienstands ist somit umso intuitiver.

Nach einer diesbezüglichen Ausgestaltung umfasst der Remote-Bedienstand eine Deichsel mit einem Deichselstiel, an dessen freiem Ende der Bedienkopf angeordnet ist. Die Deichsel kann insbesondere über eine horizontale Achse verschwenkbar sein. Auch die Deichsel des Remote-Bedienstands entspricht der Deichsel eines Flurförderzeugs und erlaubt somit insbesondere auch eine intuitive Fernsteuerung deichselgeführter Flurförderzeuge. Die Deichsel arbeitet dabei insbesondere auch nach dem erwähnten "Drive-by-Wire"-Prinzip, erzeugt also lediglich elektrische Signale ohne mechanisch auf eine Fahrzeugmechanik zuzugreifen.

Nach einer weiteren Ausgestaltung ist der Bedienkopf ein Multifunktionslenkrad, der Remote-Bedienstand weist also ein dem Multifunktionslenkrad eines Flurförderzeugs entsprechenden Bedienkopf auf.

Nach einer weiteren Ausgestaltung der Erfindung umfasst der Remote-Bedienstand die Form und die Bedienelemente eines Lenkers für Mitfahrer-Flurförderzeuge gemäß der EP 1 155 939 B1.

Nach einer weiteren Ausgestaltung der Erfindung umfasst der Remote-Bedienstand die Form und Bedienelemente eines Flurförderzeugs gemäß der EP 1 772 344 B1 oder EP 1 030 816 B1.

Nach einer Ausgestaltung umfassen die Bedienelemente eines oder mehrere der Folgenden: Fahrschalter, Wippschalter, Schalttasten, Hebel für den Fahrantrieb, Stopptasten, Rastwippen, insbesondere für eine dauerhafte Schleichfahrt, Tasten zum Hupen, Tasten zum Heben und Senken eines Lasttragmittels des Flurförderzeugs, Tasten zum Auswählen einer Vorwärts- oder Rückwärtsfahrt. Diese erläuterten Bedienelemente sind dabei erfindungsgemäß den Bedienelementen eines Flurförderzeugs nachgebildet, können also insbesondere dieselbe Bauart und Funktion aufweisen. Es kann sich um die Originalbauteile handeln, also um die gleichen Bauteile, die auch für den fahrzeugeigenen Bedienstand des Flurförderzeugs verwendet wurden. Die Bedienelemente können an dem erläuterten Bedienkopf angeordnet sein.

Nach einer Ausgestaltung ist die Funkübertragungsstrecke gesichert und/oder verfügt über eine Flusskontrolle. Die Steuereinheit kann dazu ausgebildet sein, zur Sicherung der Funkübertragung Steuersignale mindestens alle 50 ms, bevorzugt mindestens alle 40 ms, besonders bevorzugt mindestens alle 30 ms zu senden. Dies kann zu der Gewährleistung der gesicherten Funkübertragungsstrecke beitragen, da so ein quasi stetiger Datenfluss gewährleistet wird. Auch bei einer kurzen Unterbrechung der Verbindung zu dem fernzusteuernden Flurförderzeug können somit mit relativ hoher Zuverlässigkeit die Steuersignale das fernzusteuernde Flurförderzeug erreichen. Solche Steuersignale können - solange die Funkübertragungsstrecke besteht - auch im quasi-stetigen Datenfluss ausgesendet werden, wenn ein Bedienelement der Steuereinheit in seiner Nullstellung, also nicht betätigt, ist. Nach einer Ausgestaltung ist die Steuereinheit dazu ausgebildet, die Funkübertragungsstrecke mittels einer Fehlererkennung zu sichern. Beispielsweise kann als Fehlererkennung eine zyklische Redundanzprüfung (im englischen cyclic redundancy check, CRC) erfolgen. Die Steuereinheit kann folglich zum Zwecke der Redundanz den Steuersignalen jeweils einen CRC-Wert anfügen. Es kann auch eine Flusskontrolle erfolgen, d.h. die empfängerseitige Prüfung, ob die Daten regelmäßig eintreffen. Somit kann die Funkübertragungsstrecke insbesondere gegenüber Störsignalen gesichert werden.

Nach einer Ausgestaltung ist die Steuereinheit dazu ausgebildet, die Funkübertragungsstrecke mittels einer Verschlüsselung zu sichern. Dieses kann durch beliebige bekannte Verschlüsselungsverfahren erfolgen. Somit kann die Funkübertragungsstrecke insbesondere gegenüber einem fremden Zugriff gesichert werden.

Nach einer Ausgestaltung ist die Steuereinheit dazu ausgebildet, von dem fernzusteuernden Flurförderzeug für das Fernsteuern relevante Fahrzeugdaten und/oder Umgebungsdaten zu empfangen und für das Generieren der Steuersignale zu berücksichtigen. Das fernzusteuernde Flurförderzeug kann diesbezüglich unterschiedliche Sensoren aufweisen, beispielsweise Näherungssensoren und/oder Kameras zur Aufnahme der Umgebungsdaten. Die Fahrzeugdaten können von einer dem Flurförderzeug eigenen Fahrzeugsteuerung kommen und beispielsweise eine aktuelle Geschwindigkeit, einen Lenkeinschlag und/oder eine Hubhöhe eines eventuell vorhandenen Hubmastes umfassen. Nach dieser Ausgestaltung erhält die Steuereinheit folglich von dem fernzusteuernden Flurförderzeug ein Feedback. Daten von eventuell am FTF vorhandenen (Sicherheits-)Laserscannern können beispielsweise zur Festlegung einer Maximalgeschwindigkeit im ferngesteuerten Modus verwendet werden. Die Fahrzeugdaten und insbesondere die Umgebungsdaten können zudem einer den Remote-Bedienstand verwendenden Bedienperson über eine Visualisierungseinrichtung angezeigt werden, beispielsweise über einen Bildschirm, ein Head-up Display oder eine Virtual-Reality-Brille, wie bereits erwähnt.

Nach einer Ausgestaltung des Systems weist das mindestens eine ferngesteuerte Flurförderzeug keinen fahrzeugeigenen Bedienstand auf. Ein solches Flurförderzeug kann insbesondere ausschließlich fernsteuerbar sein, beispielsweise über den Remote-Bedienstand. Das Flurförderzeug kann ansonsten als FTF innerhalb eines FTS arbeiten, wofür es keinen eigenen Bedienstand benötigt. Insbesondere kann vorgesehen sein, dass das mindestens eine ferngesteuerte Flurförderzeug keinerlei fahrzeugeigene Bedienelemente aufweist. Dank des erfindungsgemäß vorgesehenen Remote-Bedienstands ist eine einfache und intuitive Bedienung auch eines solchen Flurförderzeugs möglich. Die Einsparung eines eigenen Bedienstands bzw. eigener Bedienelemente führt zu einer Verringerung des Gewichts und zu geringeren Kosten.

Das System, die Vorrichtung und das Verfahren zum Fernsteuern mindestens eines Flurförderzeugs kann auch in einem Regelbetrieb im Lager verwendet werden, in dem ein Bediener aus der Ferne mindestens ein Flurförderzeug überwacht und steuert.

Ausgestaltungen der Erfindung werden im Folgenden anhand von Figuren erläutert. Es zeigen:
- Figur 1: eine erfindungsgemäße Vorrichtung, bei welcher der Remote-Bedienstand Teil eines Fahrsimulators ist,
- Figur 2: eine erfindungsgemäße Vorrichtung, wobei ein flurförderzeugeigener Bedienstand als Remote-Bedienstand fungiert, und
- Figur 3: einen einem Bedienstand eines Flurförderzeugs nachempfundenen Bedienkopf des Remote-Bedienstands.

Soweit nichts anderes angegeben ist, bezeichnen im Folgenden gleiche Bezugszeichen gleiche Gegenstände.

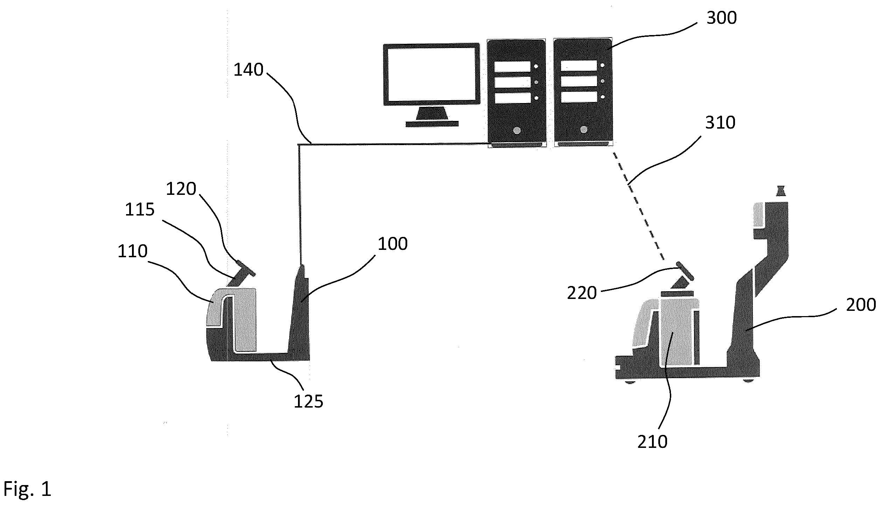

Figur 1 zeigt eine erste Ausgestaltung der Erfindung. Die erfindungsgemäße Vorrichtung umfasst einen Fahrsimulator 100 mit einem Bedienstand 110 sowie eine Steuereinheit 300. Der Bedienstand 110 des Fahrsimulators 100 weist einen an einem freien Ende einer Deichsel 115 angeordneten Bedienkopf 120 auf. Über eine Datenleitung 140 ist der Fahrsimulator 100 mit der Steuereinheit 300 verbunden. Die Kabelverbindung 140 kann auch durch eine kabellose Verbindung ersetzt werden. Die Steuereinheit 300 ist vorliegend als zentrale Steuerung ausgebildet und schematisch durch zwei Rechner und einen Bildschirm dargestellt.

Der Bedienstand 110 des Fahrsimulators 100 ist als ein erfindungsgemäßer Remote-Bedienstand ausgebildet, welcher im Folgenden mit dem Bezugszeichen 110 bezeichnet wird. Der Remote-Bedienstand 100 sowie die Deichsel 115 und der Bedienkopf 120 mitsamt daran angeordneten, nicht dargestellten Bedienelementen sind jeweils den entsprechenden Bauteilen eines Flurförderzeugs nachempfunden. Es kann sich um die Originalbauteile eines Bedienstands handeln. Insbesondere kann der gesamte Remote-Bedienstand 110, umfassend beispielsweise auch eine Standplattform 125, dem Bedienstand eines Flurförderzeugs entsprechen. Der Fahrsimulator 100 dient grundsätzlich der Schulung von Mitarbeitern im Bedienen von Flurförderzeugen. Der Fahrsimulator 100 kann nach dieser Ausgestaltung jedoch auch dazu verwendet werden, ein Flurförderzeug 200 fernzusteuern.

Das Flurförderzeug 200 kann insbesondere ein fahrerloses Transportfahrzeug (FTF) als Teil eines fahrerlosen Transportsystems (FTS) sein, kann also im regulären Betrieb automatisch arbeiten. Im Störungsfall, beispielsweise falls ein Hindernis in den Fahrweg gelangt, kann über das erfindungsgemäße Verfahren das FTF 200 ferngesteuert werden. Hierfür kann eine Bedienperson den Remote-Bedienstand 110 des Fahrsimulators 100 verwenden. Durch Betätigung der in Figur 1 nicht dargestellten Bedienelemente des Remote-Bedienstands 110 werden über die Kabelverbindung 140 Signale an die Steuereinheit 300 übermittelt, welche ansprechend auf diese Signale Steuersignale für das fernzusteuernde Flurförderzeug 200 generiert und diese Steuersignale über eine gesicherte Funkübertragungsstrecke 310 zu dem Flurförderzeug 200 übermittelt. Die Steuereinheit 300 kann grundsätzlich auch Teil des Fahrsimulators 100 sein. Die Steuersignale umfassen insbesondere Sollwerte für Steuerfunktionen des FTF 200, insbesondere Sollwerte für Fahrfunktionen des FTF 200, wie beispielsweise Lenkeinschlag und/oder Fahrgeschwindigkeit, oder auch Sollwerte für Arbeitsfunktionen des FTF 200, wie beispielsweise Hub und/oder Mastvorschub.

Da der erfindungsgemäße Remote-Bedienstand 110 mit seinen Bedienelementen und insbesondere dem Bedienkopf 120 dem Bedienstand eines Flurförderzeugs entspricht, ist die Fernsteuerung des Flurförderzeugs 200 über den erfindungsgemäßen Remote-Bedienstand 110 besonders einfach und intuitiv. Der erfindungsgemäße Remote-Bedienstand 110 kann insbesondere einem Bedienstand 210 des fernzusteuernden Flurförderzeugs 200 entsprechen, wobei der Bedienkopf 120 insbesondere einem Bedienkopf 220 des Flurförderzeugs 200 entspricht. Dies macht das Fernsteuern des Flurförderzeugs 200 besonders intuitiv. Zudem erlaubt diese Ausgestaltung die Verwendung eines möglicherweise ohnehin vorhandenen Fahrsimulators zur Fernsteuerung von Flurförderzeugen.

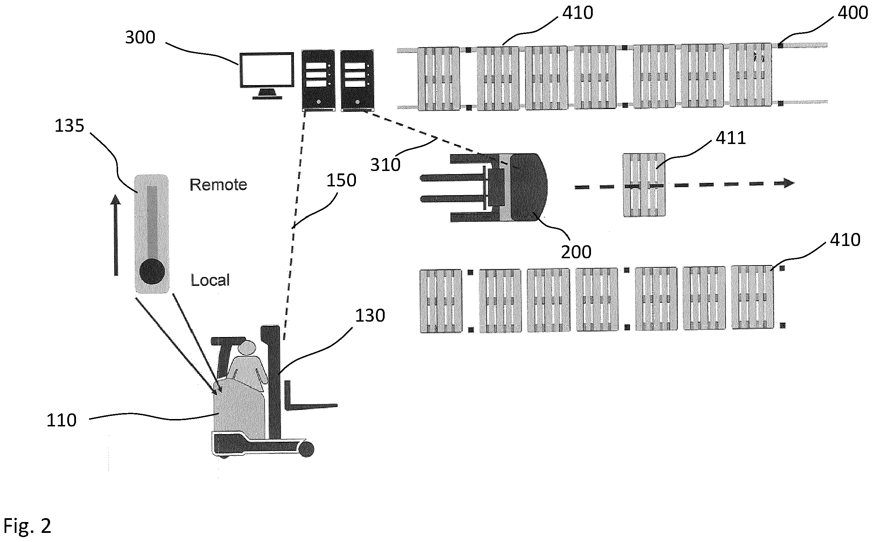

Eine zweite Ausgestaltung der Erfindung ist in Figur 2 ersichtlich, wobei hier der Remote-Bedienstand 110 durch den Bedienstand eines Flurförderzeugs 130 realisiert wird. Das Flurförderzeug 130 ist ein grundsätzlich betriebsbereites Flurförderzeug, welches im regulären Betrieb über den Bedienstand des Flurförderzeugs 130 von einer Bedienperson manuell gesteuert wird. In diesem regulären Betrieb, also bei einer manuellen, lokalen Steuerung des Flurförderzeugs 130 selbst, ist der Bedienstand 110 über ein Schaltelement 135 auf "local" gestellt, wie in Figur 2 dargestellt. In Figur 2 ist zudem wiederum die Steuereinheit 300 sowie das fernzusteuernde Flurförderzeug 200 zu erkennen. Das fernzusteuernde Flurförderzeug 200, auch hier ein FTF, ist in Draufsicht in einem Regalgang zu sehen, wobei beidseitig des Flurförderzeugs 200 Regale 400 mit Paletten 410 angeordnet sind. Im regulären Betrieb des das FTF 200 umfassenden FTS befördert das FTF 200 automatisch die Paletten 410 zwischen den Regalen 400 und einem weiteren Ort.

Sollte ein Störungsfall bei dem FTS eintreten, beispielsweise aufgrund einer im Fahrweg des FTF 200 befindlichen Palette 411, ist die automatische Steuerung des FTF 200 möglicherweise überfordert, weil es sich um eine nicht implementierte Situation handelt. Es kann dann ein manueller Eingriff nötig werden. Hierzu kann erfindungsgemäß die Bedienperson des Flurförderzeugs 130 den Bedienstand 110 ihres Flurförderzeugs über den Schalter 135 in den Remotezustand versetzen, in welchem der Bedienstand 110 als Remote-Bedienstand zur Fernsteuerung des FTF 200 fungiert. Über die nicht dargestellten Bedienelemente des Bedienstands 110 gegebene Steuerbefehle werden per Funkverbindung 150 an die zentrale Steuereinheit 300 übermittelt, von dieser in Sollwerte für das fernzusteuernde FTF 200 übersetzt und über die Funkstrecke an das FTF 200 übermittelt. Somit kann in einfacher Weise mittels eines ohnehin vorhandenen Flurförderzeugs 130 das Flurförderzeug 200 ferngesteuert werden. Auch die Funkverbindung 150 zwischen Flurförderzeug 130 und Steuereinheit 300 ist bevorzugt gesichert, beispielsweise verschlüsselt.

Bei beiden Ausgestaltungen können die Sollwerte für die Steuerfunktionen des fernzusteuernden Flurförderzeugs 200 anstatt an der zentralen Steuereinheit 300 auch bereits am Remote-Bedienstand 110 oder erst am fernzusteuernden Flurförderzeug 200 selbst erzeugt werden.

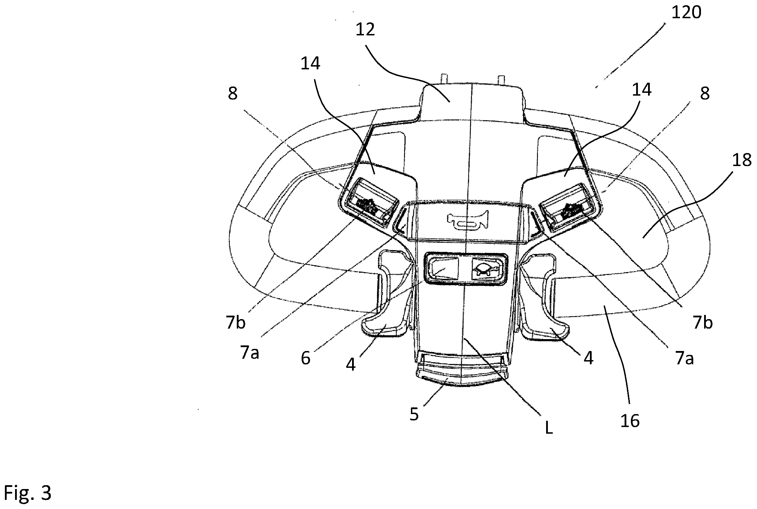

Ein Beispiel für einen Bedienkopf 120 des Remote-Bedienstands 110, der einem Bedienkopf eines Flurförderzeugs entspricht, ist in Figur 3 ersichtlich. Der Bedienkopf 120 umfasst ein sich entlang seiner Längsachse L erstreckendes Horn 12 mit sich auf gegenüberliegenden Seiten des Horns 12 von der Längsachse L forterstreckenden Tragabschnitten 14 und mit dem Horn 12 verbundenen Griffen mit jeweils gegenüberliegend der Tragabschnitte 14 angeordneten Greifabschnitten 16. Die einander gegenüberliegenden Tragabschnitte 14 und Greifabschnitte 16 sind jeweils durch eine Grifföffnung 18 voneinander beabstandet. Die Tragabschnitte 14 weisen jeweils Taster 7a zum Auslösen der Hupe auf sowie um Achsen 8 kippbare Wippen 7b zum Heben und Senken eines Lasttragmittels. An dem Horn 12 ist zudem eine Stopptaste 5 sowie eine Rastwippe 6 zum Einstellen einer dauerhaften Schleichfahrt angeordnet. An gegenüberliegenden Enden des Horns 12 sind an einem freien Ende seitlich Fahrerschaltgriffe 4 angeordnet, die jeweils um eine von dem Horn 12 fort in Richtung der jeweiligen Greifabschnitte 16 weisende Achse drehbar sind.

Die Bedienelemente 7a, 7b, 4, 5, 6 entsprechen allesamt den Bedienelementen eines Flurförderzeugs, insbesondere den Bedienelementen, welche das fernzusteuernde Flurförderzeug an seinem Bedienstand aufweist. Die Bedienelemente ermöglichen somit eine besonders einfache und intuitive Fernsteuerung.

### BEZUGSZEICHENLISTE

- 4: Bedienelement
- 5: Stopptaste
- 6: Rastwippen
- 7a: Taster
- 7b: Wippen
- 8: Achsen
- 12: Horn
- 14: Tragabschnitt
- 16: Greifabschnitt
- 18: Grifföffnung
- 100: Fahrsimulator
- 110: Bedienstand / Remote-Bedienstand
- 115: Deichsel
- 120: Bedienkopf
- 125: Standplattform
- 130: Flurförderzeug
- 135: Schalter
- 140: Kabelverbindung
- 150: Funkverbindung
- 200: Flurförderzeug / FTF
- 220: Bedienkopf
- 300: Steuereinheit
- 310: Funkübertragungsstrecke
- 400: Regale
- 410: Paletten
- 411: Palette
- L: Längsachse

## Patentansprüche

1. Vorrichtung zum Fernsteuern mindestens eines Flurförderzeugs (200), umfassend einen Remote-Bedienstand (110) sowie eine Steuereinheit (300), wobei der Remote-Bedienstand (110) einem Bedienstand eines Flurförderzeugs entsprechende Bedienelemente aufweist, wobei die Steuereinheit (300) dazu ausgebildet ist, ansprechend auf eine Betätigung der Bedienelemente des Remote-Bedienstands (110) Steuersignale für das fernzusteuernde Flurförderzeug (200) zu generieren und die Steuersignale über eine Funkübertragungsstrecke (310) zu dem fernzusteuernden Flurförderzeug (200) zu übermitteln, **gekennzeichnet durch** ein den Remote-Bedienstand (110) als eigenen Bedienstand aufweisendes Flurförderzeug.

2. Vorrichtung nach Anspruch 1, **dadurch gekennzeichnet, dass** das den Remote-Bedienstand (110) aufweisende Flurförderzeug (130) durch einen entsprechend ausgebildeten, weiteren Remote-Bedienstand fernsteuerbar ausgebildet ist.

3. Vorrichtung nach einem der vorhergehenden Ansprüche, **dadurch gekennzeichnet, dass** der Remote-Bedienstand (110) einen dem Bedienstand eines Flurförderzeugs entsprechenden Bedienkopf (120) aufweist, wobei zumindest einige der Bedienelemente an dem Bedienkopf (120) angeordnet sind.

4. Vorrichtung nach Anspruch 3, **dadurch gekennzeichnet, dass** der Remote-Bedienstand (110) eine der Deichsel eines Flurförderzeugs entsprechende Deichsel (115) mit einem Deichselstiel umfasst, an dessen freiem Ende der Bedienkopf (120) angeordnet ist und/oder dass der Bedienkopf ein Multifunktionslenkrad ist.

5. Vorrichtung nach einem der vorhergehenden Ansprüche, **dadurch gekennzeichnet, dass** die Steuereinheit (300) dazu ausgebildet ist, zur Sicherung der Funkübertragung kontinuierlich oder getaktet Steuersignale zu senden, und/oder dass die Steuereinheit (300) dazu ausgebildet ist, die Funkübertragungsstrecke (310) mittels einer Fehlererkennung, insbesondere mittels einer zyklischen Redundanzprüfung (CRC) und/oder einer empfängerseitigen Flusskontrolle, zu sichern und/oder die Funkübertragung zu verschlüsseln.

6. Vorrichtung nach einem der vorhergehenden Ansprüche, **dadurch gekennzeichnet, dass** die Steuereinheit (300) dazu ausgebildet ist, von dem fernzusteuernden Flurförderzeug (200) für das Fernsteuern relevante Fahrzeugdaten und/oder Umgebungsdaten zu empfangen und für das Generieren der Steuersignale zu berücksichtigen und/oder dem Bediener mittels einer Visualisierungsvorrichtung anzuzeigen.

7. System aus einer Vorrichtung nach einem der vorhergehenden Ansprüche und mindestens einem durch die Vorrichtung fernzusteuernden Flurförderzeug (200).

8. System nach Anspruch 7, weiter umfassend einen den Remote-Bedienstand (110) aufweisenden Fahrsimulator (100).

9. System nach einem der Ansprüche 7 oder 8, **dadurch gekennzeichnet, dass** das den Remote-Bedienstand (110) aufweisende Flurförderzeug (130) selbst durch einen entsprechend ausgebildeten, weiteren Remote-Bedienstand fernsteuerbar ausgebildet ist.

10. System nach einem der Ansprüche 7 bis 9, **dadurch gekennzeichnet, dass** das mindestens eine ferngesteuerte Flurförderzeug keinen fahrzeugeigenen Bedienstand aufweist.

11. Verfahren zum Fernsteuern mindestens eines Flurförderzeugs (200) mittels eines Remote-Bedienstands (110), wobei der Remote-Bedienstand (110) einem Bedienstand eines Flurförderzeugs entsprechende Bedienelemente aufweist, wobei ansprechend auf eine Betätigung der Bedienelemente des Remote-Bedienstands (110) eine Steuereinheit (300) Steuersignale für das fernzusteuernde Flurförderzeug (200) generiert und die Steuersignale über eine Funkübertragungsstrecke (310) zu dem fernzusteuernden Flurförderzeug (200) übermittelt, **dadurch gekennzeichnet, dass** ein den Remote-Bedienstand (110) als eigenen Bedienstand aufweisendes Flurförderzeug verwendet wird.

12. Verfahren nach Anspruch 11, **dadurch gekennzeichnet, dass** das fernzusteuernde Flurförderzeug (200) die Steuersignale empfängt und aus den empfangenen Steuersignalen Sollwerte für Steuerfunktionen generiert.

## Claims

1. A device for remotely controlling at least one industrial truck (200) comprising a remote operating station (110) and a control unit (300), wherein the remote operating station (110) has operating elements corresponding to an operating station of an industrial truck, wherein the control unit (300) is configured to generate control signals for the industrial truck (200) to be remotely controlled, in response to an actuation of the operating elements of the remote operating station (110), and to transmit the control signals via a radio transmission path (310) to the industrial truck (200) to be remotely controlled, **characterized by** an industrial truck having the remote operating station (110) as its own dedicated operating station.

2. The device according to claim 1, **characterized in that** the industrial truck (130) having the remote operating station (110) is configured to be remotely controllable by a correspondingly configured, further remote operating station.

3. The device according to one of the preceding claims, **characterized in that** the remote operating station (110) has an operating head (120) corresponding to the operating station of an industrial truck, wherein at least some of the operating elements are arranged on the operating head (120).

4. The device according to claim 3, **characterized in that** the remote operating station (110) comprises a tiller (115) corresponding to the tiller of an industrial truck and having a tiller shaft, the operating head (120) being arranged on the free end thereof and/or **in that** the operating head is a multi-functional steering wheel.

5. The device according to one of the preceding claims, **characterized in that** the control unit (300) is configured to transmit control signals in a continuous or clocked manner for securing the radio transmission, and/or **in that** the control unit (300) is configured to secure the radio transmission path (310) by means of a fault detection, in particular by means of a cyclic redundancy check (CRC) and/or a receiver-side flow control, and/or to encrypt the radio transmission.

6. The device according to one of the preceding claims, **characterized in that** the control unit (300) is configured to receive vehicle data and/or environmental data, which are relevant for the remote control, from the industrial truck (200) to be remotely controlled and to consider this data for generating the control signals and/or to display this data to the operator by means of a visualization device.

7. A system consisting of a device according to one of the preceding claims and at least one industrial truck (200) to be remotely controlled by the device.

8. The system according to claim 7, further comprising a driving simulator (100) having the remote operating station (110).

9. The system according to one of claims 7 or 8, **characterized in that** the industrial truck (130) having the remote operating station (110) is in turn configured to be remotely controllable by a correspondingly configured, further remote operating station.

10. The system according to one of claims 7 to 9, **characterized in that** the at least one remotely controlled industrial truck does not have an operating station which is dedicated to the vehicle.

11. A method for remotely controlling at least one industrial truck (200) by means of a remote operating station (110), wherein the remote operating station (110) has operating elements corresponding to an operating station of an industrial truck, wherein a control unit (300) generates control signals for the industrial truck (200) to be remotely controlled, in response to an actuation of the operating elements of the remote operating station (110), and transmits the control signals via a radio transmission path (310) to the industrial truck (200) to be remotely controlled, **characterized in that** an industrial truck having the remote operating station (110) as its own dedicated operating station is used.

12. The method according to claim 11, **characterized in that** the industrial truck (200) to be remotely controlled receives the control signals and generates target values for control functions from the received control signals.

## Revendications

1. Dispositif de télécommande d'au moins un chariot de manutention (200), comportant un poste d'actionnement à distance (110) ainsi qu'une unité de commande (300), dans lequel le poste d'actionnement à distance (110) présente des éléments d'actionnement correspondant à un poste d'actionnement d'un chariot de manutention, dans lequel l'unité de commande (300) est conçue pour générer des signaux de commander pour le chariot de manutention (200) à télécommander en réponse à une activation des éléments d'actionnement du poste d'actionnement à distance (110) et pour transmettre les signaux de commande au chariot de manutention (200) à télécommander par le biais d'une ligne de transmission sans fil (310), **caractérisé par** un chariot de manutention présentant le poste d'actionnement à distance (110) comme poste d'actionnement dédié.

2. Dispositif selon la revendication 1, **caractérisé en ce que** le chariot de manutention (130) présentant le poste d'actionnement à distance (110) est conçu de façon à pouvoir être télécommandé par un autre poste d'actionnement à distance conçu de façon correspondante.

3. Dispositif selon l'une des revendications précédentes, **caractérisé en ce que** le poste d'actionnement à distance (110) présente une tête d'actionnement (120) correspondant au poste d'actionnement d'un chariot de manutention, dans lequel au moins quelques-uns des éléments d'actionnement sont disposés sur la tête d'actionnement (120).

4. Dispositif selon la revendication 3, **caractérisé en ce que** le poste d'actionnement à distance (110) comporte un timon (115) correspondant au timon d'un chariot de manutention, avec une tige de timon à l'extrémité libre de laquelle est disposée la tête d'actionnement (120) et/ou **en ce que** la tête d'actionnement est un volant multifonction.

5. Dispositif selon l'une des revendications précédentes, **caractérisé en ce que** l'unité de commande (300) est conçue pour envoyer des signaux de commande de façon continue ou cadencée pour la sécurisation de la transmission sans fil, et/ou **en ce que** l'unité de commande (300) est conçue pour sécuriser la ligne de transmission sans fil (310) au moyen d'une détection d'erreur, en particulier au moyen d'un contrôle de redondance cyclique (CRC) et/ou d'un contrôle de flux côté récepteur, et/ou pour chiffrer la transmission sans fil.

6. Dispositif selon l'une des revendications précédentes, **caractérisé en ce que** l'unité de commande (300) est conçue pour recevoir, à partir du chariot de manutention (200) à télécommander, des données de véhicule et/ou des données d'environnement pertinentes pour la télécommande et pour les intégrer dans la génération des signaux de commande et/ou pour les indiquer à l'opérateur au moyen d'un dispositif de visualisation.

7. Système comprenant un dispositif selon l'une des revendications précédentes et au moins un chariot de manutention (200) à télécommander par le dispositif.

8. Système selon la revendication 7, comportant en outre un simulateur de conduite (100) présentant le poste d'actionnement à distance (110).

9. Système selon l'une des revendications 7 ou 8, **caractérisé en ce que** le chariot de manutention (130) présentant le poste d'actionnement à distance (110) est lui-même conçu de façon à pouvoir être télécommandé par un autre poste d'actionnement à distance conçu de façon correspondante.

10. Système selon l'une des revendications 7 à 9, **caractérisé en ce que** l'au moins un chariot de manutention télécommandé ne présente pas de poste d'actionnement propre au véhicule.

11. Procédé de télécommande d'au moins un chariot de manutention (200) au moyen d'un poste d'actionnement à distance (110), dans lequel le poste d'actionnement à distance (110) présente des éléments d'actionnement correspondant à un poste d'actionnement d'un chariot de manutention, dans lequel une unité de commande (300) génère, en réponse à une activation des éléments d'actionnement du poste d'actionnement à distance (110), des signaux de commander pour le chariot de manutention (200) à télécommander et transmet les signaux de commande au chariot de manutention (200) à télécommander par le biais d'une ligne de transmission sans fil (310), **caractérisé par** l'utilisation d'un chariot de manutention présentant le poste d'actionnement à distance (110) comme poste d'actionnement dédié.

12. Procédé selon la revendication 11, **caractérisé en ce que** le chariot de manutention (200) à télécommander reçoit les signaux de commande et génère des valeurs de consigne pour les fonctions de commande à partir des signaux de commande reçus.
